# EUROPEAN PATENT APPLICATION

(11) **EP 1 179 676 A1**
(43) Date of publication of application: **13.02.2002**
(21) Application number: 01118564.2
(22) Date of filing: 01.08.2001
(51) Int. Cl.: F02M 69/04, F02B 17/00

(54) **In-cylinder injection engine**

(30) Priority: 02.08.2000 JP 2000234045
(71) Applicant: YAMAHA HATSUDOKI KABUSHIKI KAISHA, Iwata-shi Shizuoka-ken (JP)
(72) Inventor: Yamada, Tetsurou, Iwata-shi, Shizuoka-ken (JP); Kikuchi, Katsuhiko, Iwata-shi, Shizuoka-ken (JP)
(74) Representative: Grünecker, Kinkeldey, Stockmair & Schwanhäusser Anwaltssozietät

(57) **Abstract**

In-cylinder injection engine having at least one cylinder (3) and an air intake passage means (31,32,34) for supplying air to said cylinder (3), wherein a first fuel injector (24) is provided for directly injecting fuel into said cylinder (3) and a second fuel injector means (35) is provided for injecting fuel into said air intake passage means (31,32,34).

## Description

The present invention relates to an in-cylinder injection engine and to a method for controlling an in-cylinder injection engine.

Especially, the in-cylinder injection engine is provided with a supercharger in which intake air is pressurized and introduced into each cylinder by means of a supercharger and fuel is injected by means of an injector directly into the intake air introduced into each cylinder to produce mixture.

The in-cylinder injection engine in which fuel is injected directly into each cylinder by means of an injector attached to a cylinder head has advantages such as accomplishing high output, low fuel consumption, and improved exhaust gas properties.

As the performance of the engine is improved, however, it may be difficult for the direct injector to supply not only the minute quantities of fuel required under very low speed, low load conditions as well as the larger quantity of fuel necessary to obtain maximum power output. Although this can be done by providing injectors that have a higher capacity, then the ability to inject controlled small amounts of fuel under low load conditions becomes very difficult. Also, if the injection is set so as to provide adequate and carefully controlled small amounts of fuel, then fuel must be injected for a longer time period under high speed and high load conditions and this can result in unwanted exhaust gas constituents because of the fact that the fuel may not have had the time to vaporize before combustion starts.

These problems are particularly relevant when the engine has its power increased through the use of a supercharger or pressure-forming device for introducing the charge into the combustion chamber at pressures greater than atmospheric.

An engine with a supercharger driven with exhaust gas energy or with part of the engine power is also known in which intake air is pressurized with the supercharger to produce a high output by enhancing charging efficiency of mixture.

In the in-cylinder injection engine with a supercharger, intake air is pressurized with the supercharger and introduced into each cylinder and fuel is directly injected into the intake air in each cylinder by means of an injector to produce mixture.

The conventional in-cylinder injection engine with a supercharger, however, has the following problems: Since it is intended to provide required fuel injection amount over the entire operation range with a single injector per cylinder, the required amount of fuel commensurate with the fresh air amount during supercharging cannot be injected within a specified period of time unless injection rate is increased. The increased injection rate cannot cope with the requirement of very small injection rate during a low load operation.

Another problem is that, if the fuel injection rate is set to satisfy the low load operation, fuel must be injected for a long period of time during a high load operation, which results in the generation of smoke because of insufficient time for evaporating the injected fuel.

It is an objective of the present invention to provide an in-cylinder injection engine and to a method for controlling an in-cylinder injection engine, wherein fuel injection is provided in a stable manner.

According to the apparatus aspect, said objective is solved by an in-cylinder injection engine according to claim 1.

According to the method aspect, said objective is solved by a method for controlling an in-cylinder injection engine according to claim 7.

It is an advantage of the present invention to provide an in-cylinder injection engine and to a method for controlling an in-cylinder injection engine, especially with a supercharger, wherein fuel is injected at required rates in a stabilized manner over the entire operation range, output and fuel economy is improved, and smoke is prevented from being produced.

Preferred embodiments of the present invention are laid down in the dependent claims.

In the following, the present invention is explained in greater detail with respect to an embodiment thereof in conjunction with the accompanying drawings, wherein:
- FIG. 1: is a sectional side view of an in-cylinder injection engine with a supercharger according to an embodiment;
- FIG. 2: is an enlarged, detailed sectional side view of an essential part of the same engine; and
- FIG. 3: shows the torque performance of the in-cylinder injection engine with a supercharger of this invention.

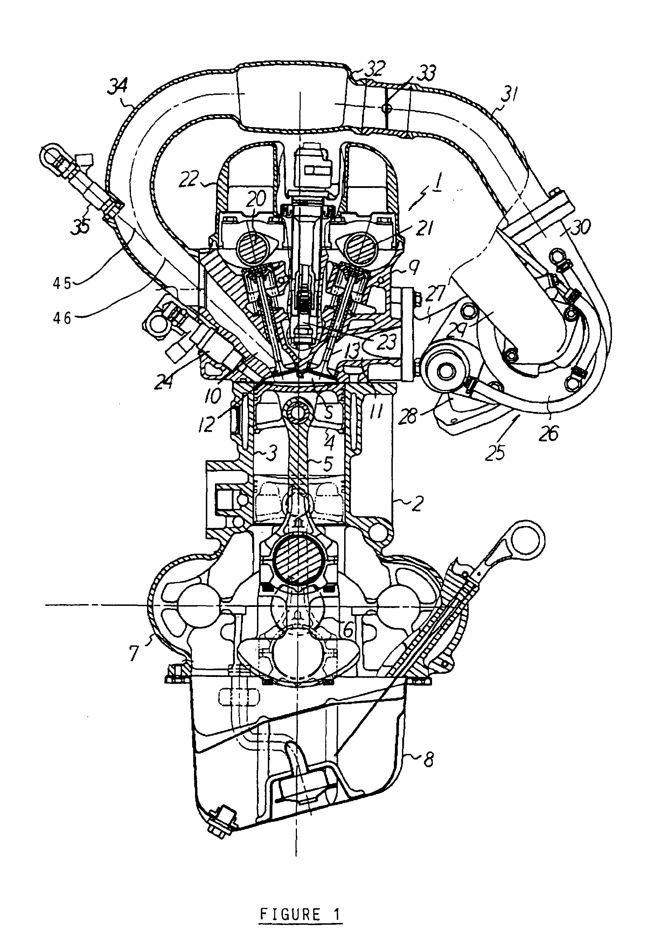

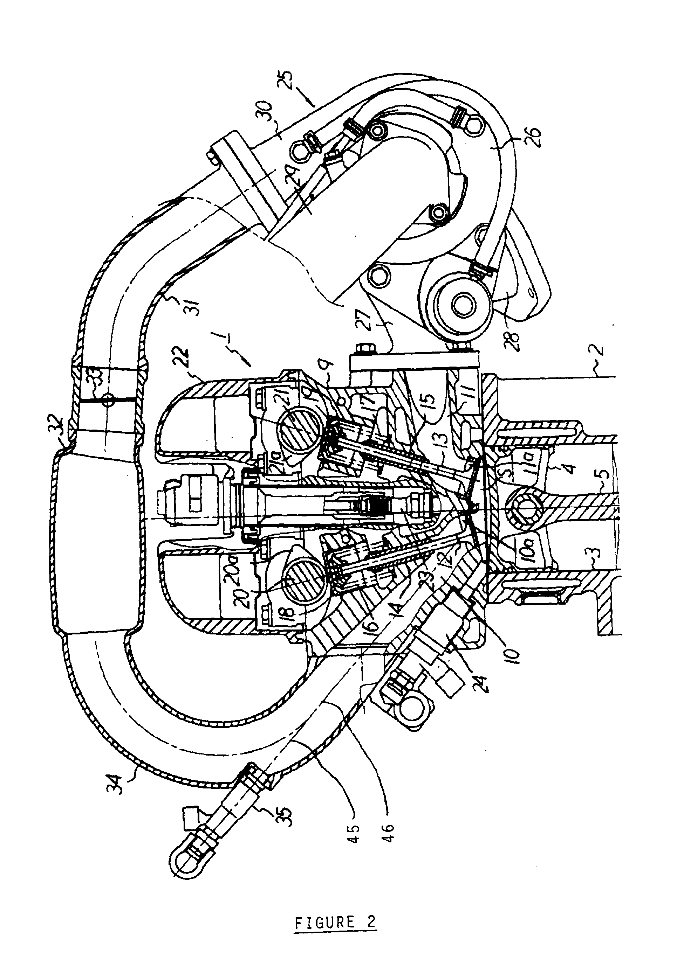

FIG. 1 is a sectional side view of an in-cylinder injection engine with a supercharger of this invention. FIG. 2 is an enlarged, detailed sectional side view of an essential part of the same engine.

An in-cylinder injection engine 1 with a supercharger (hereinafter simply called an engine) of this embodiment is for automobile use with four-stroke cycle, in-line, plural cylinders. As shown in FIG. 1, plural cylinders 3 are placed in a cylinder block 2 side by side in a row extending in the direction normal to the drawing surface. In each cylinder 3 is placed a piston 4 slidably in up and down directions, with each piston 4 connected through a connecting rod 5 to a common crankshaft 6.

The crankshaft 6 is placed in a crankcase 7 to extend in the direction normal to the drawing surface. The up-and-down, reciprocating motion of the piston 4 within the cylinder 3 is converted through the connecting rod 5 into rotating motion of the crankshaft 6. The crankcase 7 is covered from under with an oil pan 8 into which oil after lubricating various parts within the engine 1 is dropped and recovered.

The top surface of the cylinder block 2 is covered with a cylinder head 9 in which formed for each cylinder an intake passage 10 and an exhaust passage 11. The opening ends, an intake port 10a and an exhaust ports 11a (FIG. 2) facing the interior of the cylinder 3 of the intake passage 10 and the exhaust passage 11 respectively are opened and closed according to appropriate timing with an intake valve 12 and an exhaust valve 13 to exchange gas within each cylinder as required.

That is, as shown in FIG. 2 in detail, the intake valve 12 and the exhaust valve 13 are respectively passed through valve guides 14 and 15 press-fitted into the cylinder head 9 and urged by means of valve springs 16 and 17 in the closing direction to come into contact through valve lifters 18 and 19 with an intake cam 20a and an exhaust cam 21a.

The intake and exhaust cams 20a and 21a are formed integrally with an intake camshaft 20 and an exhaust camshaft 21 respectively extending parallel to each other in the direction normal to the drawing surface, with the two camshafts forming a double overhead camshaft (DOHC) mechanism.

When the engine 1 is started, the crankshaft 6 is rotated, the rotation of the crankshaft 6 is transmitted through a transmitting mechanism (not shown) to the intake and exhaust camshafts 20 and 21 to rotate them at a specified speed (half the rotating speed of the crankshaft 6). As the intake and exhaust camshafts 20 and 21 are rotated in this way, the intake and exhaust valves 12 and 13 are driven to open and close according to appropriate timing by means of the intake and exhaust cams 20a and 21a formed integrally with the intake and exhaust camshafts 20 and 21, so that gas exchange is performed as required in each cylinder 3.

A head cover 22 is placed over the cylinder head 9. An ignition plug 23 is screwed into the central part of each cylinder of the cylinder head 9. An injector 24 for injecting fuel directly into each cylinder is attached as a first injector obliquely on the intake side of the cylinder head 9.

The engine 1 of this embodiment is provided with a supercharger 25 of a turbo-type attached to the exhaust side of the cylinder head 9.

The turbo-charger 25 comprises a casing 26 in which are placed coaxially an exhaust gas turbine (not shown) and a compressor (not shown). The inlet side of the turbo-charger 25 is connected through an (exhaust) inlet pipe 27 to an exhaust passage 11 formed in the cylinder head 9. An exhaust pipe (not shown) is connected to an (exhaust) outlet pipe 28 extending on the outlet side. An (air) inlet pipe 29 extending from an air cleaner (not shown) is connected in the axial center on the inlet side of the compressor. An intake pipe 31 is connected to an (air) outlet pipe 30 extending from the outlet side obliquely upward in the direction of the tangent of the outside circumference of the casing 26.

The intake pipe 31 is connected to a surge tank 32 placed above the main part of the engine. A throttle valve 33 is provided in the middle of the intake pipe 31. Each intake pipe of an intake manifold 34 extends from the surge tank 32 and curves in an arcuate shape downward so that its end is connected to each intake passage 10 formed for each cylinder in the cylinder head 9. An injector 35 as a second injector for port injection is provided in the middle of each intake pipe of the intake manifold 34 separately from the injector 24 for injecting into the cylinder.

Each injector 35 for port injection is attached obliquely at about the same tilt angle with that of the intake passage 10 so that the fuel injection direction is tangent to the intake air flow in the intake pipe of the intake manifold 34. In particular, the second fuel injectors 35 are mounted in the curved portions of the intake manifold 34. A spray axis 45 of each of these second fuel injectors 35 is aligned with a flow axis 46 of the straight portion of the intake manifold 34 and the cylinder head intake passages. Thus, the fuel sprayed by the injectors 35 will be well mixed with the intake air and will not tend to impinge upon the walls of the intake passage.

How the engine 1 constituted as described above works will be described below.

When the engine 1 is started, gas of high temperature and high pressure produced by the combustion of mixture in the combustion chamber S of each cylinder flows from the exhaust passage 11 of the cylinder head 9 through the inlet pipe 27 into the turbo-charger 25 to rotate an exhaust gas turbine (not shown) and is discharged from the outlet pipe 28 through an exhaust pipe (not shown) into the atmosphere.

When the exhaust gas turbine is driven for rotation with the exhaust gas as described above, a compressor (not shown) coaxially coupled to the exhaust gas turbine is also driven for rotation and draw fresh air from an air cleaner (not shown) through the inlet pipe 29 in the axial direction into the compressor. The fresh air is pressurized with the compressor and discharged through the outlet pipe 30 to the intake pipe 31, metered with the throttle valve 33, and drawn into the surge tank 32.

When the intake valve 12 opens in the intake stroke of the piston 4 in each cylinder moving down, pressurized fresh air in the surge tank 32 is supplied through the intake manifold 34 and the intake passage 10 of the cylinder head 9 and the intake port 10a into the cylinder 3 (supercharged). To the fresh air supplied into the cylinder 3 is injected fuel from the in-cylinder injection purpose injector 24 according to appropriate timing for a specified period of time, so that mixture of a specified air-to-fuel ratio (A/F ratio) is produced in the cylinder 3. As described later, when load is high, fuel is injected also from the port injection -purpose injector 35 into the fresh air flowing through the intake manifold 34 to produce mixture. Incidentally, the exhaust valve 13 remains closed during the intake stroke.

After that, when the piston 4 passes the bottom dead center (BDC) and begins to move up in the compression stroke, soon the valve 12 is closed, mixture in the cylinder 3 is compressed. Immediately before the piston 4 reaching the top dead center (TDC), the mixture is ignited with the ignition plug 23 and burned to produce combustion gas of high pressure and high temperature in the combustion chamber S. Then, the piston 4, with its top surface receiving high combustion gas pressure, moves down in the expansion stroke during which the intake and exhaust valves 12 and 13 remain closed.

After that, when the piston 4 approaches the bottom dead center, the exhaust valve 13 opens. In the exhaust stroke of the piston 4 moving up, the combustion gas of high temperature and high pressure is discharged through the exhaust port 11a to the exhaust passage 11 and further as described above through the inlet pipe 27 to the turbocharger 25 to drive the exhaust gas turbine.

The embodiment described above teaches an in-cylinder injection engine having at least one cylinder 3 and an air intake passage means 31,32,34 for supplying air to said cylinder 3. A first fuel injector 24 is provided for directly injecting fuel into said cylinder 3 and a second fuel injector means 35 is provided for injecting fuel into said air intake passage means 31,32,34. According to the embodiment one second fuel injector 35 is provided for each cylinder. According to another embodiment (not shown) one second fuel injector my be common for a cylinders.

The in-cylinder injection engine according to the embodiment comprises a supercharger 25 for supplying pressurized air to said air intake passage means 31,32,34, wherein the second fuel injector means 35 is located on the downstream side of the supercharger 25. Said supercharger is a turbo-supercharger 25 driven by exhaust gas of the engine or a mechanical-supercharger (not shown) mechanically driven by said engine.

The second fuel injector means 35 is provided for injecting fuel in a direction which is generally tangent to an intake air flow in the intake passage means. Said intake passage means comprises a surge tank 32 and an air intake manifold 34 provided downstream of said surge tank 32. Said air intake manifold 34 comprises a passage for each cylinder, respectively, and each passage of the air intake manifold 34 is provided with one second fuel injector 35.

Thereafter, the above-described strokes are repeated as the engine 1 continues its operation. The engine 1 of this embodiment is provided with two injectors; the in-cylinder injection injector 24 and the port injection injector 35. When load is low, fuel is injected with the in-cylinder injection injector 24 only and when load is high, fuel is injected with both of the in-cylinder injection injector 24 and the port injection injector 35.

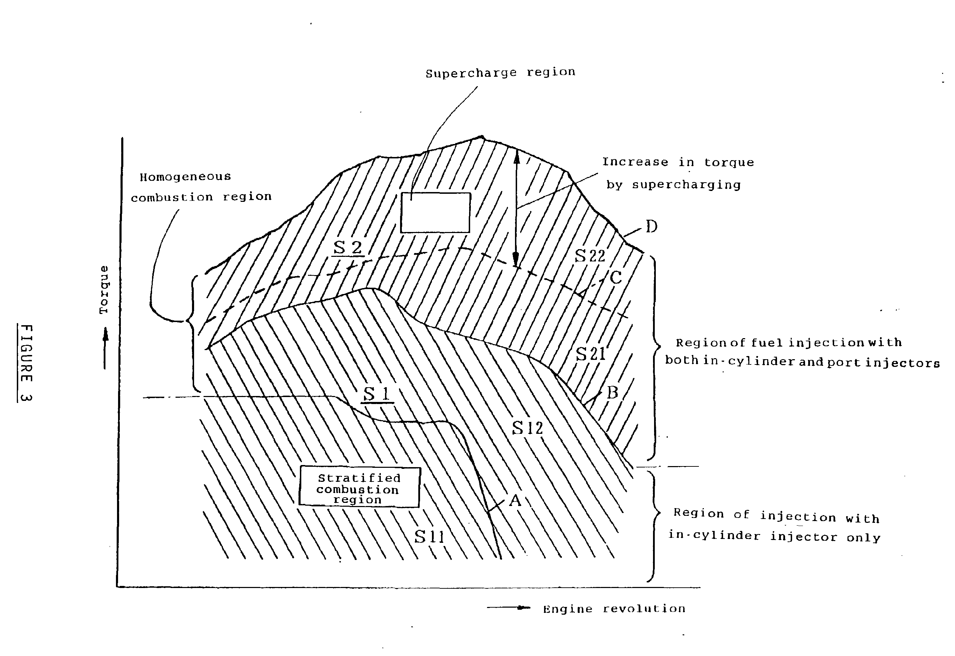

When the operating condition of the engine corresponds to the low load region S1 surrounded with the curve B and the horizontal axis in FIG. 3 showing engine torque characteristic, fuel is injected with only the injector 24 for in-cylinder injection. For the high load region S2 surrounded with the curve B and the curve D, fuel is injected with both of the in-cylinder injection injector 24 and the port injection injector 35.

When the operating condition of the engine corresponds to the region S11 surrounded with the curve A and the horizontal axis, a very small amount of fuel is injected from the in-cylinder injection injector 24 locally to the vicinity of the ignition plug and burned to cause stratified combustion. For other regions S12 and S2(S21, S22), fuel is uniformly mixed with air and burned to cause homogeneous combustion. Incidentally, the curve C represents the torque without supercharging with the turbocharger 25. The region S22 is the supercharge region corresponding to the increase in the engine torque caused by the supercharging with the turbocharger 25.

The control strategy by which the injectors 43 and 44 are operated will now be described by reference to FIG. 3. As seen in this figure, the curve B delineates the range when only the first fuel injector 24 is employed from the range when both injectors 24 and 35 are employed to supply fuel. Within this range, there is a further range, indicated by the curve A under which the engine operates in a stratified charge mode. This area is indicated by the reference character S11. Under this condition the injector 24 only injects a small amount of fuel necessary to sustain engine operation. This fuel is injected toward the gap of the spark plug and at a timing to insure that the charge will ignite even though the total charge in the combustion chamber is less that stoichiometric.

Outside of the curve A and below the curve B in this figure, there is a range indicated as S12. In said range, the fuel is supplied only by the first injector 24 but the engine is operated to provide homogeneous combustion.

Intake air is supplied to the cylinder 3,of the in-cylinder injection engine. Fuel is directly injected to said cylinder 3 by the first fuel injector 24 and fuel is injected into the intake air in an air intake passage means by a second fuel injector means 35. Said in-cylinder engine is controlled by the steps of:
- injecting fuel directly into the cylinder 3 only by first fuel injector 24 at first specific running condition of the engine (below curve B);
- injecting fuel directly into the cylinder 3 by first fuel injector 24 and injecting fuel into the intake air in the air intake passage means by a second fuel injector means 35 at second specific running condition of the engine (above curve B).

The first specific running condition of the engine comprises a low range of low load and/or low speed condition and a mid range of mid load and/or mid speed condition, wherein at low range load of the first specific running condition of the engine (below curve A) small amount of fuel directly injected into the cylinder 3 only, providing a total charge less than a stoichiometric charge, and at mid range fuel directly injected into the cylinder 3 only, providing a homogenous charge (above curve A and below curve B).

The second specific running condition of the engine comprises a high load and/or high speed condition, and at the second specific running condition fuel is directly injected into the cylinder 3 and injected into the intake air in the air intake passage means providing a homogenous charge (above curve B).

Above the curve B, there is homogenous combustion and the mixture is supplied by the combination of the injectors 24 and 35. Since both injectors 24 and 35 are supplying fuel, it is possible to inject the necessary amount of fuel over the entire engine speed and low ranges. The disposition of the injector 35 in relation to the induction system flow passage, as previously noted, improves in the obtaining of the homogenous mixture.

In this portion of the curve, there is a broken line C which shows the torque which would be provided by the engine were it not for the supercharger 25. The curve D shows the actual output with the supercharger 25 operative so that the increase in torque between these two is indicated by the dimension as indicated.

With the supercharger pressurized intake air is supplied to the cylinder 3, wherein at the second specific running condition fuel amount directly injected into the cylinder 3 and injected into the intake air in the air intake passage means is adapted to an amount of pressurized intake air providing a homogenous charge.

Although the embodiment has been described in conjunction with an engine having a turbocharger, other forms of compressors can be employed including centrifugal or positive displacement type compressors or any other type of mechanically driven supercharger.

As described above, since this embodiment is provided with the injector 35 for port injection of injecting fuel into the fresh air flowing through each intake pipe of the intake manifold 34 as well as the injector 24 for injecting fuel directly into each cylinder 3, it is possible to inject fuel in amounts neither too much nor too little as required over the entire engine operation range, by injecting a very small amount of fuel with the injector 24 when load is low and injecting fuel with both of the injectors 24 and 35 when load is high to improve engine output and fuel economy. Injecting fuel with both of the injectors 24 and 35 when load is high makes it possible to inject a required amount of fuel within a short period of time, and to evaporate the injected fuel well enough so that smoke is prevented from being produced.

With this embodiment, since fuel is injected from the port injection injector 35 approximately in the direction tangent to the fresh air flow in the intake pipe of the manifold 34, it is possible to produce mixture smoothly, and to reduce intake resistance as the injected fuel does not interfere with the fresh air flow in the intake pipe of the manifold 34.

The embodiment mentioned above shows an in-cylinder injection engine with a supercharger wherein intake air is pressurized and introduced into each cylinder by means of the supercharger and fuel is injected by means of a first injector directly into the intake air introduced into each cylinder to produce mixture. The second injector is provided separately from the first injector for injecting fuel in the middle of each intake passage located on the downstream side of the supercharger.

Since the second injector is provided to inject fuel in the middle of each intake passage separately from the first injector for injecting fuel directly into each cylinder, it is possible to inject exact, neither too much nor too little amount of fuel in a stabilized manner over the entire operation range; very small amount of fuel by means of the first injector when load is low and larger amounts by means of both the first and the second injectors when load is high, improving engine output and fuel economy. It is also possible to prevent smoke from being produced when load is high as fuel in required amount can be injected within a short period of time and fuel is evaporated well enough.

The second injector is attached so that its fuel injecting direction is nearly tangent to the intake air flow in the intake passage. Since the direction of fuel injected from the second injector is approximately tangent to the intake air flow in the intake passage, mixture is produced smoothly, the fuel injection does not disturb the flow of intake air, and so the intake flow resistance is held down.

The embodiment mentioned above teaches an in-cylinder injection engine especially with a supercharger wherein intake air is pressurized and introduced into each cylinder by means of the supercharger. Fuel is directly injected into the intake air introduced into each cylinder by means of a first injector to produce mixture, a second injector is provided separately from the first injector for injecting fuel in the middle of each intake passage. Said second injector is located on the downstream side of the supercharger. As a result, such effects are provided as improving engine output and fuel economy and preventing smoke from being produced by injecting required amount of fuel in a stabilized manner over the entire operation range.

## Claims

1. In-cylinder injection engine having at least one cylinder (3) and an air intake passage means (31,32,34) for supplying air to said cylinder (3), wherein a first fuel injector (24) is provided for directly injecting fuel into said cylinder (3) and a second fuel injector means (35) is provided for injecting fuel into said air intake passage means (31,32,34).

2. In-cylinder injection engine according to claim 1, **characterized by** a supercharger (25) for supplying pressurized air to said air intake passage means (31,32,34), wherein the second fuel injector means (35) is located on the downstream side of the supercharger (25).

3. In-cylinder injection engine according to claim 2, **characterized in that** said supercharger is a turbo-supercharger (25) driven by exhaust gas of the engine or a mechanical-supercharger mechanically driven by said engine.

4. In-cylinder injection engine according to at least one of the claims 1 to 3, **characterized in that** the second fuel injector means (35) is provided for injecting fuel in a direction which is generally tangent to an intake airflow in the intake passage means (31,32,34).

5. In-cylinder injection engine according to at least one of the claims 1 to 4, **characterized in that** the second fuel injector means comprises at least one second fuel injector (35) associated to said at least one cylinder (3).

6. In-cylinder injection engine according to claim 5, **characterized in that** said intake passage means comprises a surge tank (32) and an air intake manifold (34) provided downstream of said surge tank (32), wherein said air intake manifold (34) comprises a passage for each cylinder, respectively, and each passage of the air intake manifold (34) is provided with one second fuel injector (35).

7. Method for controlling an in-cylinder injection engine having at least one cylinder (3) supplied with intake air, wherein fuel is directly injected to said cylinder (3) by a first fuel injector (24) and fuel is injected into the intake air in an air intake passage means (31,32,34) by a second fuel injector means (35), said method comprises the steps of:
- injecting fuel directly into the cylinder (3) only by first fuel injector (24) at first specific running condition of the engine;
- injecting fuel directly into the cylinder (3) by first fuel injector (24) and injecting fuel into the intake air in the air intake passage means (31,32,34) by a second fuel injector means (35) at second specific running condition of the engine.

8. Method for controlling an in-cylinder injection engine according to claim 7, **characterized in that** the first specific running condition of the engine comprises a low range of low load and/or low speed condition and a mid range of mid load and/or mid speed condition, wherein at low range load of the first specific running condition of the engine small amount of fuel directly injected into the cylinder (3) only, providing a total charge less than a stoichiometrc charge, and at mid range fuel directly injected into the cylinder (3) only, providing a homogenous charge.

9. Method for controlling an in-cylinder injection engine according to claim 7 or 8, **characterized in that** the second specific running condition of the engine comprises a high load and/or high speed condition, and at the second specific running condition fuel is directly injected into the cylinder (3) and injected into the intake air in the air intake passage means (31,32,34) providing a homogenous charge.

10. Method for controlling an in-cylinder injection engine according to at least one of the claims 7 to 9, **characterized in that** pressurized intake air is supplied to the cylinder (3), wherein at the second specific running condition fuel amount directly injected into the cylinder (3) and injected into the intake air in the air intake passage means (31,32,34) is adapted to an amount of pressurized intake air providing a homogenous charge.
